Europäisches Patentamt

European Patent Office

Office européen des brevets

(11) Veröffentlichungsnummer : **0 100 416**
**B1**

(12) **EUROPÄISCHE PATENTSCHRIFT**

(45) Veröffentlichungstag der Patentschrift :
**06.05.87**

(51) Int. Cl.⁴ : **B 23 Q 41/00**, B 23 Q   7/14

(21) Anmeldenummer : **83105758.3**

(22) Anmeldetag : **11.06.83**

(54) **Fertigungsstrecke (Transferlinie) für die Bearbeitung von Werkstücken.**

(30) Priorität : **29.07.82 DE 3228378**

(43) Veröffentlichungstag der Anmeldung :
**15.02.84 Patentblatt 84/07**

(45) Bekanntmachung des Hinweises auf die Patenterteilung : **06.05.87 Patentblatt 87/19**

(84) Benannte Vertragsstaaten :
**BE DE FR GB IT SE**

(56) Entgegenhaltungen :
**DE-A- 2 810 822**
**DE-A- 3 149 864**
**US-A- 3 473 643**
**PATENT ABSTRACTS OF JAPAN, Band 3, Nr. 123, 16. Oktober 1979, Seite 104 C 61 & JP-A-54 AN) 15-08-1979**

(73) Patentinhaber : **KUKA Schweissanlagen & Roboter GmbH**
**Blücherstrasse 144**
**D-8900 Augsburg (DE)**

(72) Erfinder : **Kraus, Josef**
**Wilhelm-Raabe-Strasse 12**
**D-8902 Neusäss (DE)**
Erfinder : **Jaufmann, Franz**
**Schnitter Strasse 1**
**D-8901 Wehringen (DE)**

(74) Vertreter : **Ernicke, Hans-Dieter, Dipl.-Ing.**
**Schwibbogenplatz 2b**
**D-8900 Augsburg (DE)**

## Beschreibung

Die Erfindung bezieht sich auf eine Fertigungsstrecke (Transferlinie) für die Bearbeitung von Werkstücken, insbesondere zum Zusammenführen und Schweißen von Karosserieteilen, bestehend aus mehreren in Reihe hintereinander und längs einer Fördereinrichtung angeordneten Bearbeitungsmaschinen, denen die Werkstücke taktweise durch die hin- und herbewegliche Fördereinrichtung (Transport-Shuttle) zugeführt werden.

Solche Transferlinien, wie sie beispielsweise als Schweißtransferstraßen in der Automobilindustrie eingesetzt werden, haben durch die starre Verkettung der Bearbeitungsstationen den Nachteil, daß immer nur ein Werkstücktyp bearbeitet werden kann. Das führt dazu, daß in Automobilwerken bei einem Modellwechsel die gesamte Transferstraße zum Umrüsten demontiert und wieder neu aufgebaut werden muß. Solche Umrüstarbeiten können bis zu einem halben Jahr dauern und beeinträchtigen dadurch erheblich die Wirtschaftlichkeit einer Transferstraße.

Es ist zwar bekannt, z. B. von der DE-A-3 149-864, Bearbeitungsmaschinen mit wahlweise einsetzbaren Mehrfachwerkzeugen auszurüsten, so daß wenigstens zwei oder mehrere verschiedene Werkstücke bearbeitet werden können, die dadurch erreichte Flexibilität genügt aber den heutigen Ansprüchen nicht mehr.

Diese Probleme wurden z. T. dadurch behoben, daß flexible Transportmittel eingesetzt werden, die die starre Verkettung der Bearbeitungsmaschinen aufheben. Dieser Weg ist sehr kostenintensiv und nur dann rentabel, wenn viele unterschiedliche Kleinserien gleichzeitig bearbeitet werden sollen.

Es ist daher Aufgabe der vorliegenden Erfindung, die Flexibilität einer Transferstraße mit starr verketteten und in einer Reihe hintereinander angeordneten Bearbeitungsmaschinen zu erhöhen und deren Demontage beim Bearbeiten von Werkstücken anderer Bautypen zu vermeiden.

Ausgehend von der eingangs erwähnten bekannten Fertigungsstraße besteht das Wesen der Erfindung darin, daß für die Bearbeitung von Werkstücken verschiedener Bautypen die hierfür benötigten Bearbeitungsmaschinen in einer Reihe hintereinander angeordnet sind, von denen die zur Bearbeitung des gerade zugeführten Werkstückes nicht benötigten Bearbeitungsmaschinen auf eine Betriebsweise als Leerstationen umschaltbar sind, in denen das Werkstück von der Fördereinrichtung bis in eine bearbeitungsfreie Zwischenstellung anhebbar und bei Beendigung des Arbeitstaktes wieder auf die Fördereinrichtung absenkbar ist.

Die Erfindung geht demnach vom Grundgedanken aus, auch diejenigen Bearbeitungsmaschinen in die Reihe aufzunehmen, die für einen bestimmten Bautyp gar nicht benötigt werden. In solchen Bearbeitungsmaschinen wird das Werkstück in eine Art Wartestellung gebracht, ohne daß es bearbeitet wird, so daß die Förderelemente der Fördereinrichtung unbeladen in ihre Ausgangsstellung zurückkehren können, um das jeweils nächste Werkstück aufzunehmen.

Durch die Doppelfunktion einer typgebundenen Bearbeitungsmaschine, die für passende Werkstücktypen als Bearbeitungsstation und für unpassende als Leerstation dient, kann die Flexibilität einer Transferstraße beliebig erhöht werden. Von besonderem Vorteil ist dabei, daß die Steigerung der Flexibilität unter Beibehaltung der kostengünstigsten Fördervorrichtung, beispielsweise eines Transport-Shuttles, erzielt werden kann. Der angebliche Nachteil eines solchen Transportmittels, nämlich die von ihm bedingte starre Verkettung der Bearbeitungsmaschinen untereinander, wird durch die Erfindung aufgehoben, und die Transferstraße kann insgesamt wesentlich kostengünstiger betrieben werden. In der Transferstraße können damit unterschiedliche Werkstücktypen nach beliebiger Wahl gefahren werden, ohne daß es zu irgendwelchen Stauungen kommen kann.

Ein weiterer Vorteil liegt darin, daß die Transferstraße zum Umrüsten nicht stillgelegt werden muß. Wenn nicht alle Werkstücktypen gleichzeitig ausgewechselt werden, können die umzurüstenden Bearbeitungsmaschinen während des Werkzeugwechsels immer noch als Leerstationen arbeiten. Dieser Vorteil kann bei entsprechender kontruktiver Ausbildung der Bearbeitungsmaschine auch bei solchen Maschinen, die mit Mehrfachwerkzeugen ausgerüstet sind, zum Tragen kommen.

Im Rahmen einer Ausgestaltung der Erfindung ist vorgesehen, daß an die einzelne Bearbeitungsmaschine mindestens eine seitliche Zuführung von Kleinteilen angeschlossen ist.

Bei vorbekannten Fertigungsstraßen war die seitliche Zuführung von Kleinteilen, die beispielsweise zum Schweißen benötigt werden, deshalb ausgeschlossen, weil an der Bearbeitungsmaschine seitlich genügend Raum für die Unterbringung von Werkzeugen in ihrer Parkstellung benötigt wurde. Mit der Erfindung ist nun dieser Platzbedarf nicht mehr erforderlich, weshalb die Zuführung von Kleinteilen zeit- und kostensparend und insbesondere auch auf einfache Weise gelöst werden kann. Bei Schweiß- bzw. Heftmaschinen kommt es entscheidend darauf an, das Aufsetzen der manchmal zahlreichen Kleinteile in der vom Takt der Fertigungsstraße vorgegebenen Zeit auf der Fördervorrichtung, die über geeignete Spannmittel verfügt, auszuführen. Das gleiche gilt beim Aufspannen der Kleinteile auf sogenannten Unterkupferwagen, die häufig mittig geteilt und in ihren Teilen quer zur Transferlinie bewegbar geführt sind. Indem die Kleinteilzuführung seitlich daran anschließt, ist das Aufsetzen der Kleinteile auf die Unterkupferwagen wesentlich erleichtert.

Die Erfindung kann in mannigfacher Weise ausgeführt werden. Im besonderen ist vorgesehen, daß die einzelne Bearbeitungsmaschine eine vom Arbeitshub zur Bearbeitung des Werkstückes unabhängige Hubanordnung zum Anheben des Werkstückes in die Zwischenstellung aufweist. Verschiedene Ausführungsvarianten hierzu ergeben sich aus den Unteransprüchen.

Ausführungsbeispiele der Erfindung sind in der Zeichnung schematisch dargestellt. Es zeigen :

Figur 1 eine symbolische Teil-Draufsicht auf eine Fertigungsstraße,

Figuren 2 bis 4 Seitenansichten von Bearbeitungsmaschinen mit unterschiedlich gestalteten Hubanordnungen,

Figur 5 einen Querschnitt nach der Linie A-A durch eine als Leerstation wirkende Bearbeitungsmaschine gemäß Fig. 1 und

Figur 6 einen Querschnitt nach der Linie B-B durch eine für den Bearbeitungsprozeß bestimmte Bearbeitungsmaschine gemäß Fig. 1.

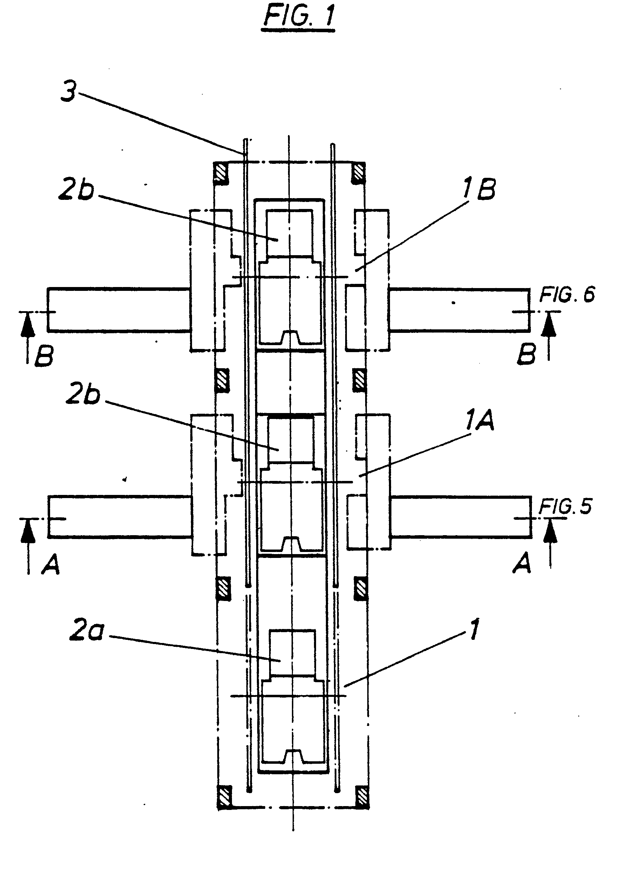

In Fig. 1 ist ein Teil einer Fertigungsstraße (Transferlinie) dargestellt. Bei diesem Ausführungsbeispiel handelt es sich um eine Schweiß-Transferstraße, bei der mehrere Bearbeitungsmaschinen 1, 1A, 1B hintereinander in Reihe angeordnet sind und durch eine als Transport-Shuttle 3 ausgebildete Fördervorrichtung miteinander verbunden sind. Statt den Bearbeitungsmaschinen, die im Ausführungsbeispiel als Heftschweißstationen dargestellt sind, können auch beliebige andere Maschinen wie Pressen, Lackierstationen, spanabhebende Werkzeugmaschinen oder ähnliches vorgesehen sein. Desgleichen kann statt dem Transport-Shuttle 3 auch ein anderes Transportmittel vorgesehen sein, das die Bearbeitungsmaschinen fortlaufend miteinander verbindet ·und das taktweise sowie schrittweise arbeitet. Solche Fördervorrichtungen 3 können alle in der Transferstraße befindlichen Werkstücke 2 gleichzeitig von einer Station 1, 1A, 1B in die nächste befördern, wo sie vom einzelnen Transportmittel entfernt werden, so daß dieses leer in die Ausgangsstellung zurückkehren kann.

Wie aus Fig. 1 ersichtlich, befinden sich in den Bearbeitungsmaschinen 1 der Fertigungsstrecke unterschiedliche Werkstücke 2. Die Bearbeitungsmaschinen 1 weisen nun aber unterschiedliche Werkzeuge auf, mit denen nur ein Werkstück eines Typs oder bei Einsatz von Mehrfach-Werkzeugen nur wenige Typen von Werkstücken 2 bearbeitet werden können. Im Ausführungsbeispiel der Fig. 1 kann auf der ersten, mit B bezeichneten Bearbeitungsmaschine 1 nur ein Werkstück vom Typ 2b bearbeitet werden. Das gleiche gilt für die nachgeschaltete Bearbeitungsmaschine 1A, auf der nur ein Werkstück vom Typ 2a bearbeitet werden kann. In die Bearbeitungsmaschine 1A hat das Transport-Shuttle 3 nun aber ein Werkstück 2b befördert. In diesem Fall arbeitet die Bearbeitungsmaschine 1A als Leerstation, indem das Werkstück 2b zwar vom Transport-Shuttle 3 abgehoben und in eine Zwischenstation gebracht, aber nicht bearbeitet wird. Das Transport-Shuttle 3 kann nun leer zurückgehen und die später wieder abgesetzten Werkstücke 2 beim nächsten Hub in die nachfolgende Bearbeitungsmaschine transportieren.

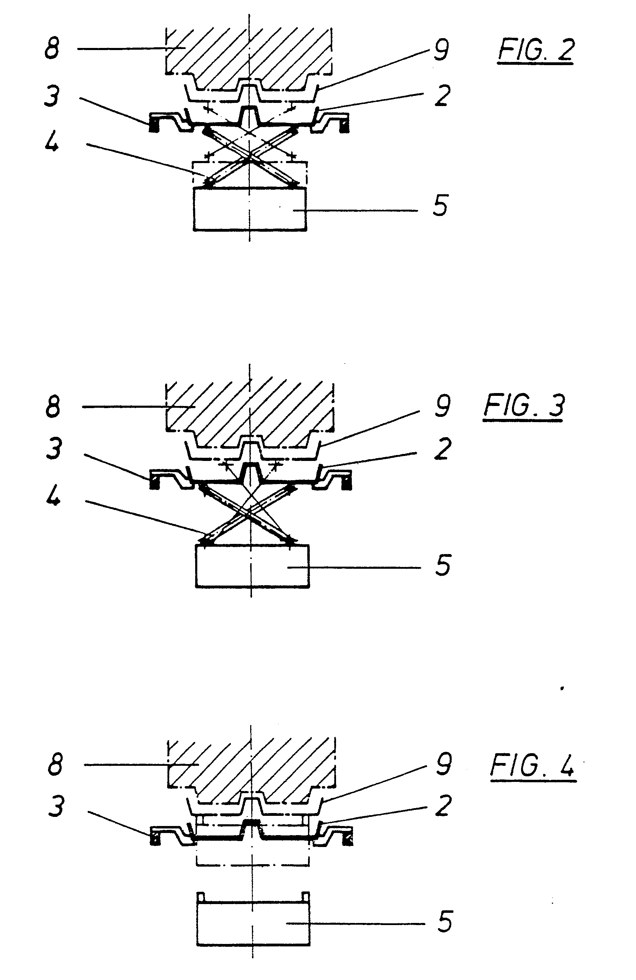

Für dieses Anheben stehen mehrere Möglichkeiten zur Verfügung, von denen in den Fig. 2 bis 4 einige dargestellt sind. Im Fall der Fig. 2 weist die Bearbeitungsmaschine 1 einen Hubtisch 5 auf, auf dem eine Hubanordnung 4 versenkbar gelagert ist. Diese Hubanordnung 4 wird mit Hilfe eines geeigneten Antriebes in die gezeichnete Stellung gebracht, bei der sie noch nicht in Kontakt mit dem von der Fördervorrichtung 3 herangebrachten Werkstück 2 gelangt. Erst dann, wenn der Hubtisch 5 angehoben wird, trifft die ausgefahrene Hubanordnung 4 gegen das Werkstück 2 und hebt dieses in die gestrichelte Zwischenstellung 9, bei der es keinen Kontakt mit dem Werkzeug-Oberbau 8 erhält.

Im Fall der Fig. 3 bleibt der Hubtisch 5 gänzlich außer Betrieb. Stattdessen wird die Hubanordnung. Über die in Fig. 2 gezeigte Ausfahrstellung noch weiter aufwärts bewegt, um das Werkstück 2 von der Fördervorrichtung abzuheben. Als Hubanordnung 4 kann jede übliche Konstruktion, auch eine zwei- oder mehrstufige, verwendet werden.

Bei der Variante nach Fig. 4 wird der Hubtisch 5, der keine weitere Hubanordnung aufweist, in die gezeigte Zwischenstellung 9 angehoben, wobei er so konstruiert ist, daß er die Bewegung der Fördervorrichtung 3 nicht behindert. Auch in diesem Fall wird das Werkstück 2 zwar von der Fördervorrichtung 3 abgehoben, ohne aber in Kontakt mit dem Oberbau 8 des Werkzeuges zu gelangen.

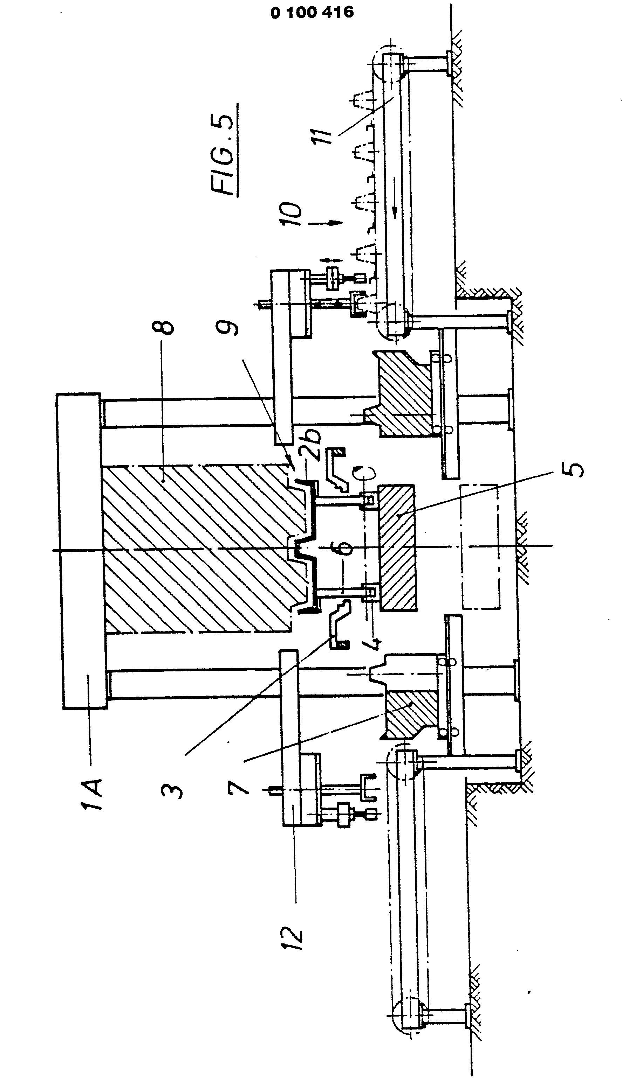

Fig. 5 zeigt eine Bearbeitungsmaschine 1A im Querschnitt. In diesem besonderen Ausführungsbeispiel handelt es sich dabei um eine Heftschweißstation mit einem geteiltem Unterkupferwagen 7. Durch eine an sich bekannte Vorrichtung zur Typenkennung der Werkstücke ist der Maschinensteuerung der Heftschweißstation mitgeteilt worden, daß ein nicht zum Werkzeug passendes Werkstück 2b auf dem Transport-Shuttle 3 sitzt. Somit bleiben die beiden Teile des Unterkupferwagens 7 im ausgefahrenen Zustand. Das in diese Bearbeitungsmaschine 1A eingefahrene Werkstück wird von einer Hubanordnung 6, beispielsweise einer Hubgabel, untergriffen, die aus einer Ausweichstellung in ihre Hubstellung gebracht wird. Diese Hubgabel 6 sitzt an einem Hubtisch 5, der an sich dazu bestimmt ist, die Unterkupferwagen 7 aufzunehmen und diese mit dem Werkstück 2 in die Arbeitsstellung zu bringen. Im vorliegenden Fall bewegt der Hubtisch 5 aber nur die Hubanordnung (Hubgabel 6) nach oben, die das nicht passende Werkstück 2b erfaßt, vom Transport-Shuttle 3 abhebt und in eine Zwischenstellung bringt. Das Werkstück 2b berührt dabei nicht den Oberbau 8 des Schweißwerkzeuges der Bearbeitungsmaschine 1A. Nach Ablauf der vorgesehenen Taktzeit senkt sich wieder der Hubtisch 5 und setzt dabei das Werkstück 2b auf dem Transport-Shuttle 3 ab, das im anschließenden Förderhub das Werkstück 2b aus der Bearbeitungsmaschine 1 der nachfolgenden Bearbeitungsstation zuführt und mit einem anderen Förderelement gleichzeitig ein neues Werkstück 2 aus der vorhergehenden Bearbeitungsstation in die Bearbeitungsmaschine 1 einführt. Die Hubanordnung (Hubgabel 6) wird dann wieder in ihre verdeckte Ausgangsstellung zurückgefahren, so daß bei Anwesenheit eines passenden Werkstückes 2 der geteilte Unterkupferwagen 7 auf den Hubtisch 5 verschoben werden kann.

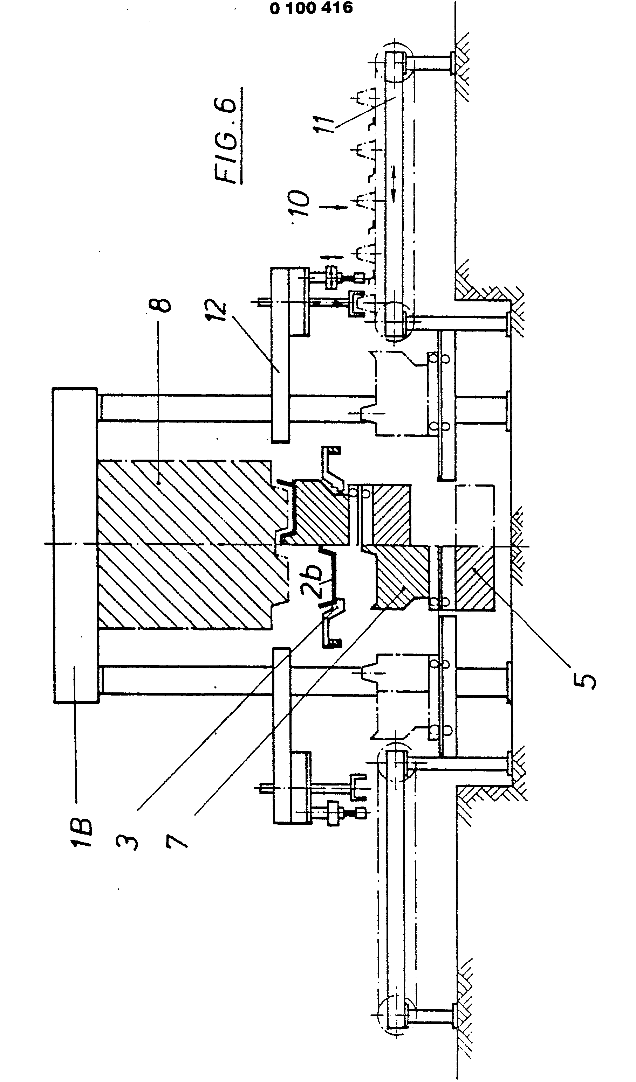

Diesen Fall stellt die Fig. 6 dar, bei der das Werkzeug der Bearbeitungsmaschine 1B und das Werkstück 2b zusammenpassen. In an sich bekannter Weise hebt der Hubtisch 5 dann den zusammengefahrenen Unterkupferwagen 7 an, ohne daß die Hubgabel 6 hochgeklappt wird. Bei dieser Hubbewegung wird ebenfalls das Werkstück 2b vom Transport-Shuttle 3 abgehoben, auf dem Unterkupferwagen 7 zentriert und in die Bearbeitungsstellung gegen den Oberbau 8 des Schweißwerkzeuges gedrückt.

Im Vergleich der Fig. 5 und 6 wird von einem konstanten Hub des Hubtisches 5 ausgegangen. In einem Fall (Fig. 6) führt dieser Hub zum Versetzen des Werkstückes 2 in die Arbeitsstellung, also zum Kontakt mit dem Oberbau 8. Im anderen Fall (Fig. 5) reicht der gleiche Hub nur dazu aus, das Werkstück 2 in die Zwischenstellung 9 zu bringen. Diese an sich widersprüchliche Wirkung beruht darauf, daß der Unterkupferwagen 7 eine größere Bauhöhe als die Hubgabel 6 in ihrer ausgefahrenen Stellung besitzt.

Im Beispiel der Fig. 5 und 6 ist schließlich noch gezeigt, daß an die Bearbeitungsmaschine 1A, 1B seitlich je eine Kleinteilzuführung 10 angeschlossen ist, die beim Beispiel aus einem Magazin 11 und einer Übergabevorrichtung 12 besteht. Deren Funktion besteht darin, die Kleinteile auf kürzestem Weg bis über den ausgefahrenen Unterkupferwagen 5 zu bewegen und darauf abzusetzen. Wäre die Bearbeitungsmaschine 1 mit auswechselbaren Werkzeugen ausgerüstet, würden diese der Anordnung einer Kleinteilzuführung hinderlich sein.

Der im Ausführungsbeispiel beschriebene Aufbau der Hubanordnung 4, 6 kann in noch anderer Weise abgewandelt werden, was nicht zuletzt auch durch die unterschiedlichen Arten von Bearbeitungsmaschinen bedingt ist. Es können dabei mehrere völlig voneinander getrennte Hubmittel, miteinander gekoppelte oder ein einziges Hubmittel verwendet werden. Desgleichen ist es auch denkbar, daß ein einziges Hubmittel vorgesehen ist, das stets die gleiche Bewegung ausführt, daß aber die Form des Werkzeuges und die Form der Werkstücke so aneinander angepaßt sind, daß das passende Werkstück vom Werkzeug mitgenommen wird, während ein unpassendes beispielsweise teilweise in das Werkzeug eintaucht, und damit, absolut gesehen, nur um eine Teilstrecke angehoben wird.

Mit der Zahl der erfindungsgemäßen typgebundenen Bearbeitungsmaschinen steigt die Flexibilität der Transferstraße. In einer Transferstraße können somit typgebundene und typungebundene Bearbeitungsmaschinen angeordnet sein, wodurch auch die Wirtschaftlichkeit von typungebundenen Maschinen gesteigert wird.

**Patentansprüche**

1. Fertigungsstrecke (Transferlinie) für die Bearbeitung von Werkstücken (2, 2a, 2b), insbesondere zum Zusammenführen und Schweißen von Karosserieteilen, bestehend aus mehreren in Reihe hintereinander und längs einer Fördereinrichtung (3) angeordneten Bearbeitungsmaschinen (1, 1A, 1B), denen die Werkstücke taktweise durch die hin- und herbewegliche Fördereinrichtung (Transport-Shuttle) (3) zugeführt werden, dadurch gekennzeichnet, daß für die Bearbeitung von Werkstücken (2) verschiedener Bautypen (2a, 2b) die hierfür benötigten Bearbeitungsmaschinen (1, 1A, 1B) in einer Reihe hintereinander angeordnet sind, von denen die zur Bearbeitung des gerade zugeführten Werkstückes (2b) nicht benötigten Bearbeitungsmaschinen (1A) auf eine Betriebsweise als Leerstationen umschaltbar sind, in denen das Werkstück (2b) von der Fördereinrichtung (3) bis in eine bearbeitungsfreie Zwischenstellung (9) anhebbar und bei Beendigung des Arbeitstaktes wieder auf die Fördereinrichtung (3) absenkbar ist.

2. Fertigungsstrecke nach Anspruch 1, dadurch gekennzeichnet, daß an die einzelne Bearbeitungsmaschine (1, 1A, 1B) mindestens eine seitliche Zuführung (10) von Kleinteilen angeschlossen ist.

3. Fertigungsstrecke nach Anspruch 1, dadurch gekennzeichnet, daß die einzelne Bearbeitungsmaschine (1, 1A, 1B) eine vom Arbeitshub zur Bearbeitung des Werkstückes (2) unabhängige Hubanordnung (4, 6) zum Anheben des Werkstückes (2) in die Zwischenstellung (9) aufweist.

4. Fertigungsstrecke nach Anspruch 3, dadurch gekennzeichnet, daß die Hubanordnung (4, 6) an einem das Werkstück (2) in die Bearbeitungslage bewegenden Hubtisch (5) vorgesehen und in zwei Stellungen bewegbar ist, von denen die eine Stellung eine Ausweichstellung im Hinblick auf die Verbindung des Hubtisches (5) mit einem Werkstückträger (7) (z. B. Unterkupferwagen) und die andere Stellung eine Anhebestellung zur Aufnahme des nicht zu bearbeitenden Werkstückes (2) ist.

5. Fertigungsstrecke nach Anspruch 4, dadurch gekennzeichnet, daß die Hubanordnung (4, 6) in der Anhebestellung eine geringere Bauhöhe als der Werkstückträger (7) im Falle seiner Verbindung mit dem Hubtisch (5) aufweist.

6. Fertigungsstrecke nach Anspruch 3 oder folgenden, dadurch gekennzeichnet, daß die Hubanordnung (4) eine zweite Hubstufe aufweist, mit deren Hilfe das Werkstück (2) von der Fördereinrichtung (3) bis in die Zwischenstellung (9) bei unbetätigtem Hubtisch (5) anhebbar ist.

7. Fertigungsstrecke nach Anspruch 3 oder folgenden, dadurch gekennzeichnet, daß der Hubantrieb des Hubtisches (5) in zwei der Zwischen- und Arbeitsstellung entsprechende Höhen steuerbar ist.

## Claims

1. A production line (transfer line) for processing workpieces (2, 2a, 2b), more particularly for joining and welding car body parts, comprising a plurality of processing machines (1, 1A, 1B) which are arranged in a row one behind the other along a conveying device (3), and to which the workpieces are delivered via the reciprocally moving conveying device (transport shuttle) (3), characterised in that for processing the workpieces (2) of different types of structure (2a, 2b) the processing machines (1, 1A, 1B) required for this are arranged in a row one behind the other, of which the processing machines (1A) not required for processing the workpiece (2) which has just been delivered can be changed over the operation as empty stations, in which the workpiece (2b) can be lifted from the conveying device (3) until it is in a non-processing intermediate position (9) and can be lowered again onto the conveying device (3) when the operation cycle is over.

2. A production line according to claim 1, characterised in that at least one lateral delivery (10) for small parts is connected to the individual processing machine (1, 1A, 1B).

3. A production line according to claim 1, characterised in that the individual processing machine (1, 1A, 1B) has a lifting arrangement (4, 6), independent of the operation lift for processing the workpiece (2), for lifting the workpiece (2) into the intermediate position (9).

4. A production line according to claim 3, characterised in that the lifting arrangement (4, 6) is provided on a lifting table (5) moving the workpiece (2) into the processing position and can be moved to two positions, of which one position is a withdrawal position relative to the connection of the lifting table (5) to a workpiece holder (7) (e. g. copper back-up bar carriage) and the other position is a lifting position for receiving the workpiece (2) not to be processed.

5. A production line according to claim 4, characterised in that the lifting arrangement (4, 6) in the lifting position is lower in height than the workpiece support (7) in the case of its connection to the lifting table (5).

6. A production line according to any of claims 3 to 5, characterised in that the lifting arrangement (4) has a second lifting stage, with the aid of which the workpiece (2) can be lifted from the conveying device into the intermediate position (9) when the lifting table (5) is inactive.

7. A production line according to any of claims 3 to 6, characterised in that the lifting drive of the lifting table (5) can be guided to two heights corresponding to the intermediate and operating position.

## Revendications

1. Chaîne de production (ligne transfert) pour l'usinage de pièces (2, 2a, 2b), notamment pour l'assemblage et le soudage de parties de carrosserie, constituée de plusieurs machines d'usinage (1, 1A, 1B) disposées les unes derrière les autres en série le long d'un dispositif de transport (3) et auxquelles les pièces sont amenées en cadence par le dispositif de transport qui va et vient (navette de transport) (3), caractérisée en ce que pour l'usinage de pièces (2) de types de construction (2a, 2b) différents, les machines d'usinage (1, 1A, 1B) nécessaires à cet effet sont disposées les unes derrière les autres en série, celles (1A) qui ne sont pas nécessaires à l'usinage de la pièce (2b) qui vient d'être amenée pouvant passer à un mode de fonctionnement en tant que postes vides, dans lesquels la pièce (2b) peut être soulevée par le dispositif de transport (3) jusqu'à une position intermédiaire (9) sans usinage et, lorsque le cycle de travail est terminé, peut être rabaissée sur le dispositif de transport (3).

2. Chaîne de production suivant la revendication 1, caractérisée en ce qu'aux machines d'usinage (1, 1A, 1B) individuelles, est raccordée au moins une alimentation (10) latérale en petit matériel de montage.

3. Chaîne de production suivant la revendication 1, caractérisé en ce que les machines d'usinage (1, 1A, 1B) individuelles comportent un dispositif élévateur (4, 6) qui est destiné à mettre par soulèvement la pièce (2) en la position intermédiaire (9) et qui est indépendant de la course de travail pour l'usinage de la pièce (2).

4. Chaîne de production suivant la revendication 3, caractérisée en ce que le dispositif élévateur (4, 6) est prévu sur une table élévatrice (5) mettant la pièce (2) en la position d'usinage et peut être mis en deux positions, dont l'une est une position empêchant la liaison de la table élévatrice (5) avec un support de pièce (7) (par exemple un chariot support en cuivre) et dont l'autre est une position de levage pour la réception de la pièce (2) qui ne doit pas être usinée.

5. Chaîne de production suivant la revendication 4, caractérisée en ce que le dispositif élévateur (4, 6) présente, en la position de soulèvement, une hauteur de construction plus petite que le support de pièce (7) dans le cas de sa liaison avec la table élévatrice (5).

6. Chaîne de production suivant la revendication 3 ou les suivantes, caractérisée en ce que le dispositif élévateur (4) comporte un second étage élévateur, à l'aide duquel la pièce (2) peut être soulevée du dispositif de transport (3) jusqu'à la position intermédiaire (9), alors que la table élévatrice (5) est en l'état de repos.

7. Chaîne de production suivant la revendication 3 ou les suivantes, caractérisée en ce que le dispositif d'entraînement de la table élévatrice (5) peut être commandé de manière à venir à deux niveaux correspondant à la position intermédiaire et à la position de travail.

## FIG. 1

8 — 9 — _FIG. 2_
3 —
4 — 2
5

8 — 9 — _FIG. 3_
3 —
4 — 2
5

8 — 9 — _FIG. 4_
3 — 2
5

FIG.5

0 100 416

FIG.6

1B  3  7  2b  5  8  12  10  11

0 100 416